Europäisches Patentamt

European Patent Office

Office européen des brevets

(11) Publication number: **0 188 301**
**B1**

# EUROPEAN PATENT SPECIFICATION

(45) Date of publication of patent specification: **13.07.88**

(51) Int. Cl.⁴: **B 29 C 45/16**

(21) Application number: **86200032.0**

(22) Date of filing: **09.01.86**

(54) Method for manufacturing a sealing body, particularly for a pipe joint, and mould for manufacturing a sealing body.

(30) Priority: **14.01.85 NL 8500074**
**24.05.85 NL 8501500**

(43) Date of publication of application:
**23.07.86 Bulletin 86/30**

(45) Publication of the grant of the patent:
**13.07.88 Bulletin 88/28**

(84) Designated Contracting States:
**AT BE CH DE FR GB IT LI LU NL SE**

(56) References cited:
**EP-A-0 017 300**
**EP-A-0 031 620**
**FR-A-2 090 633**

(73) Proprietor: **WAVIN B.V.**
**Händellaan 251**
**NL-8031 EM Zwolle (NL)**

(72) Inventor: **Kalriis-Nielsen, Erling**
**5, Violvej**
**DK-8450 Hammel (DK)**
Inventor: **Laarhoven, Johannes Josephus**
**16, Scholtensdijk**
**NL-7771 CV Hardenberg (NL)**
Inventor: **Beune, Johannes Hendrikus**
**79, Zoom**
**NL-5061 RB Oisterwijk (NL)**

(74) Representative: **van der Veken, Johannes
Adriaan et al**
**EXTERPATENT B.V. P.O. Box 90649**
**NL-2509 LP 's-Gravenhage (NL)**

Courier Press, Leamington Spa, England.

## Description

The invention relates to a method for manufacturing a sealing body, particularly for a pipe joint, comprising a retaining ring of thermoplastic material, which is to be fastened on the end portion of a pipe part, and a sealing ring disposed coaxially to said retaining ring and bonded thereto, one of these elements being moulded in a first mould cavity, after which the other element is moulded in a second mould cavity, which is partly bounded by a part of the previously moulded element.

A method of this kind is known from EP—A—31 620.

According to this known method a sealing ring consisting of a head portion and a sealing sleeve is moulded in a first mould cavity bounded by a first, a second and a third mould cavity surface. The portion of the mould cavity for the sealing sleeve is mainly bounded by the first and second mould cavity surfaces and the portion of the mould cavity for the head portion is mainly bounded by the third mould cavity surface. The third mould cavity surface is then replaced by a fourth mould cavity surface and the retaining ring is mould by injection moulding of the thermoplastic material around the head portion of the sealing ring in a mould cavity bounded by said head portion and the fourth mould cavity surface, the sealing sleeve being confined between the first and second mould surfaces.

This method has a number of drawbacks. The retaining ring must in fact be moulded around the head portion of the sealing ring, which is often made of relatively soft material, so that on the injection of the material of the retaining ring this head portion may be deformed. In addition, the moulded sealing body is difficult to remove from the mould cavity. Moreover, the cycle time for the moulding of the sealing body is relatively long.

It is the object of the invention to obviate these drawbacks.

This object is attained with a method of the abovementioned kind, which is characterized in that the retaining ring is first moulded by injection moulding in a first mould cavity bounded by a first outer mould cavity surface and a first inner mould cavity surface, both surfaces being movable in the axial direction of the mould cavity, relative to one another, the first mould cavity is opened, while the moulded retaining ring remains on the first inner mould cavity surface, the retaining ring is removed from the first inner mould cavity surface by means of a stripper means and is placed back against the oppositely situated first outer mould cavity surface, whereupon the sealing ring is moulded in a second mould cavity situated next to the retaining ring and bounded by a part of the surface of the retaining ring, a second inner mould cavity surface, and a second outer mould cavity surface which is movable in the axial direction of the mould cavity relative to the second inner mould cavity surface, the sealing ring thus being bonded to the retaining ring, the second mould cavity is opened, and finally the sealing body is removed from the mould. In this way it is ensured that the sealing ring is moulded in a mould cavity entirely bounded by non-deformable surfaces, so that during the moulding of the sealing ring no deformation of the mould cavity surfaces occurs.

The sealing ring is preferably moulded by injection moulding of a thermoplastic material, particularly a thermoplastic rubber. Expediently the sealing ring is moulded practically simultaneously with a following retaining ring in first and second mould cavities, spaced apart from one another, in one and the same mould, the removal of the sealing body from the mould likewise being effected practically simultaneously with the removal of the second retaining ring from the first inner mould cavity surface and its replacement against the oppositely situated first outer mould cavity surface.

Through these steps the cycle time for moulding the seal is considerably shortened, so that a substantial saving of costs is achieved.

During the opening of the second mould cavity the sealing body can remain on the first outer mould cavity surface and the second inner mould cavity surface and be removed from these mould cavity surfaces by means of ejector means. This ensures that a moulded sealing body which in itself is non-releasing, can nevertheless be removed from the mould cavity in a simple manner.

Alternatively, the sealing body is carried by the second outer cavity surface, during the opening of the second mould cavity, and removed from this mould cavity surface by means of a stripper means.

The invention also relates to a mould for manufacturing a sealing body, particularly for a pipe joint, comprising a retaining ring which is to be fastened on the end portion of a pipe part, and a sealing ring disposed coaxially to said retaining ring and bonded thereto, said mould comprising a first mould cavity, in which one of these elements is moulded and a second mould cavity in which is subsequently moulded the other element, said second mould cavity being partly bounded by a part of the previously moulded element, this mould being characterized in that it comprises two halves movable relative to one another, one mould half being provided with at least two first outer mould cavity surfaces and two second inner mould cavity surfaces and the other mould half being provided with at least one first inner mould cavity surface and one second outer mould cavity surface, which surfaces can be positioned coaxially opposite the first outer mould cavity surfaces and the second inner mould cavity surfaces to enclose at least one first mould cavity and one second mould cavity, while each first outer mould cavity surface expediently adjoins a second inner mould cavity surface.

In a preferred embodiment of the mould, the two mould halves are rotatable relative to one another about an axial located centrally between

the two first outer mould cavity surfaces and the two second inner mould cavity surfaces respectively, and centrally between the first inner mould cavity surface and the second outer mould cavity surface, and extending parallel to the axes of symmetry of the mould cavity surfaces, whereby the first inner mould cavity surface and the second outer mould cavity surface can selectively be positioned opposite one of the first outer mould cavity surfaces and respectively one of the second inner mould cavity surfaces.

Through this construction the time between two successive injection moulding stages can be kept short, which is advantageous in respect of the cycle time. In addition the construction of the mould can be kept relatively simple.

The invention will now be explained through the description of an example of embodiment and with reference to the drawing, wherein:

Figure 1 shows a sealing body produced by the method according to the invention, partly in cross-section and partly in elevation;

Figure 2 shows schematically the different phases during the moulding of the sealing body of Figure 1;

Figure 3 is a schematic section through a part of a mould for moulding the sealing body of Figure 1, in the closed state;

Figure 4 shows another sealing body produced by the method according to the invention, partly in cross-section and partly in elevation;

Figure 5 shows schematically the different phases during the moulding of the sealing body of Figure 4;

Figure 6 is a schematic section through a part of a mould for moulding the sealing body of Figure 4, in the closed state; and

Figure 7 shows a cross-section through a number of other sealing bodies produced by the method according to the invention.

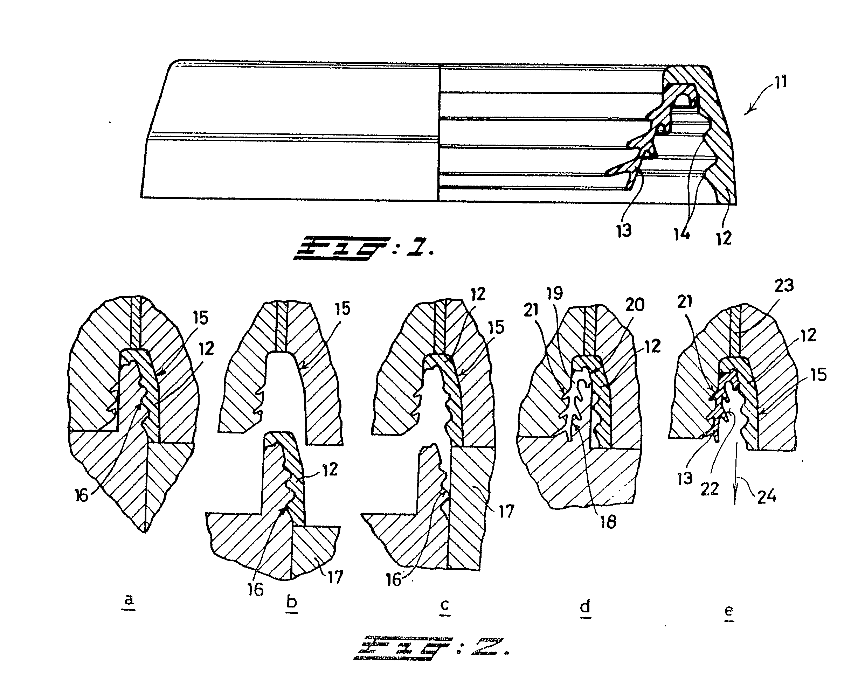

In Figure 1 a sealing body 11 for a pipe joint is shown which comprises a retaining ring 12 of thermoplastic material, intended to be fastened to an end portion (not shown) of a pipe part, and a sealing ring 13 disposed coaxially to said retaining ring and bonded thereto. The sealing ring 13 preferably consists of a thermoplastic rubber. The retaining ring 12 is provided internally with at least one annular ridge 14, which is adapted to cooperate with a complementarily shaped annular depression or an end portion of a pipe part, for the purpose of fastening a sealing body 11 on the pipe part.

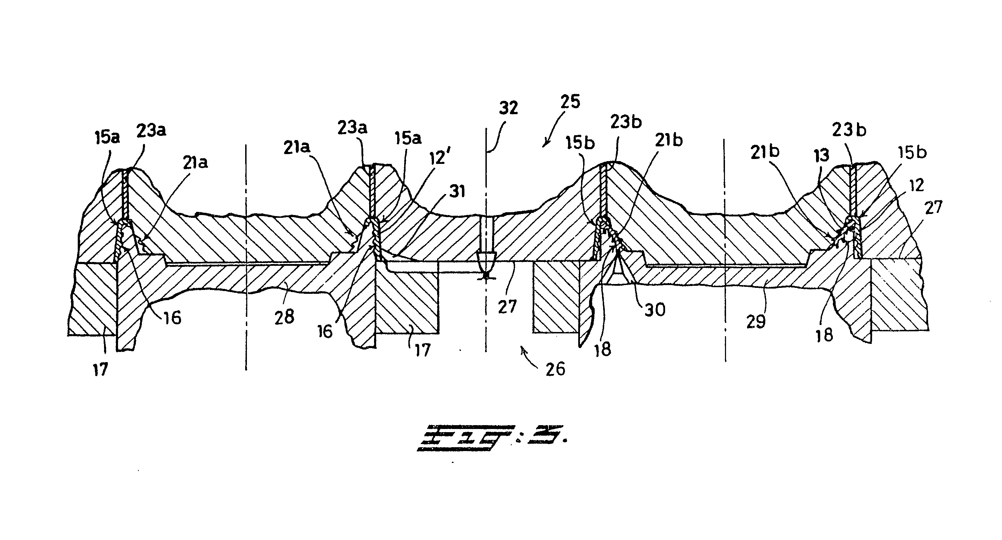

Figure 2 shows the different phases during the moulding of the sealing body shown in Figure 1. Figure 2a shows the phase after the retaining ring 12 has been moulded by injection moulding in a first mould cavity bounded by a first outer mould cavity surface 15 and a first inner mould cavity surface 16. The two mould cavity surfaces are movable relative to one another in the axial direction of the mould cavity. The mould cavity is thereupon opened by moving the mould cavity surfaces 15 and 16 away from one another, the moulded retaining ring 12 remaining behind on the first inner mould cavity surface 16, while the outer side of the retaining ring 12 lies free, as shown in Figure 2b. The retaining ring 12 is then removed by stripper means 17 from the first inner mould cavity surface 16 under temporary deformation of said retaining ring, which is then placed back against the first outer mould cavity surface 15 (Figure 2c). By positioning of a second outer mould cavity surface 18 in the manner shown in Figure 2d a second mould cavity 19 is formed for the sealing ring 13, this cavity then being bonded by the second outer mould cavity surface 18, a part 20 of the surface of the retaining ring 12 and a second inner mould cavity surface 21, after which the sealing ring 13 is moulded in the mould cavity 19 by injection moulding, preferably of a thermoplastic material, particularly a thermoplastic rubber. The sealing ring 13 is thereby bonded to the retaining ring 12. The mould cavity 19 is then opened by moving apart the second outer mould cavity surface 18 and the second inner mould cavity surface 21, which surfaces are movable relative to one another in the axial direction of the mould cavity 19, while the sealing body 11 remains on the first outer mould cavity surface 15 and the second inner mould cavity surface 21, and the outer side 22 of the sealing ring 13 lies free (Figure 2e).

Finally, the sealing body 11 is removed from said mould cavity surfaces 15, 21 in the direction of the arrow 24 in Figure 2e by means of ejector means 23 movable in the axial direction of the sealing body 11, this being possible because the sealing ring 13 is made of flexible material.

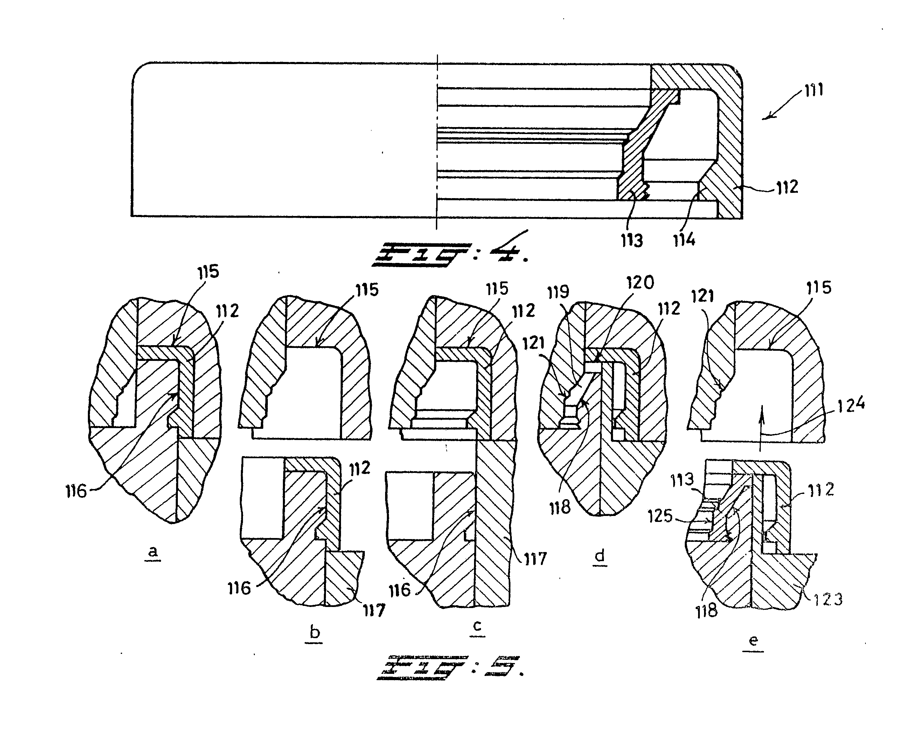

Figure 3 shows in a schematic section through a part of the mould for moulding the sealing body 11, in the closed position. The mould comprises two halves 25 and 26, which are separated from one another by a parting line 27. In one mould half are provided at least two first outer mould cavity surfaces 15a and 15b and two second inner mould cavity surfaces 21a and 21b, each first outer mould cavity surface 15a, 15b adjoining a second inner mould cavity surface 21a, 21b respectively, as can be seen in Figure 3 and also in Figure 2, as well as ejector means 23a and 23b moveable in the axial direction relative to the mould half 25. In the other mould half 26 are provided at least one first inner mould cavity surface 16 and a second outer mould cavity surface 18 on the mould parts 28 and 29 respectively, as well as a stripper means 17 moveable in the axial direction over the mould part 28. The two mould halves 25 and 26 are rotatable, relative to one another, about an axis 32 located centrally between the two first outer mould cavity surfaces 15a, 15b and the two second inner mould cavity surfaces 21a, 21b respectively, and centrally between the first inner mould cavity surface 16 and the second outer mould cavity surface 18, and extending parallel to the axes of symmetry of the mould cavity surfaces. The mould cavity surfaces 15a, 15b, 21a, 21b in the mould half 25 can be positioned coaxially opposite the mould cavity surface 16 and 18 in the mould half 26 in order to enclose a first mould cavity and a second mould cavity for the retaining ring 12' and the sealing ring 13 respectively, as shown in Figure 3.

A sealing ring can thus be moulded practically simultaneously with a following retaining ring 12' in first and second mould cavities spaced apart in one and the same mould.

The material for the sealing ring 13 and the retaining ring 12' can be fed through separate injection moulding sprues 30 and 31 respectively into the mould.

After a sealing ring 13 and a retaining ring 12' have been moulded practically simultaneously in the closed mould, and the sealing ring 13 has been bonded to the previously moulded retaining ring 12, the mould halves 25 and 26 are moved apart in the axial direction of the mould cavities, and then practically simultaneously the sealing body 11 is removed from the mould by means of the ejector means 23b and the retaining ring 12' is removed from the first inner mould cavity surface 16 by means of stripper means 17 and placed back against the first outer mould cavity surface 15a. The mould halves 25 and 26 are then rotated over an angle of 180 degrees about the axis 32, relative to one another, until the first inner mould cavity surface 16 comes to lie coaxially opposite the first outer mould cavity surface 15b and the second outer mould cavity surface 18 comes to lie coaxially opposite the first outer mould cavity surface 15a with the retaining ring 12' and the second outer mould cavity surface 21a, whereupon the mould is closed again and the next retaining ring and sealing ring are moulded.

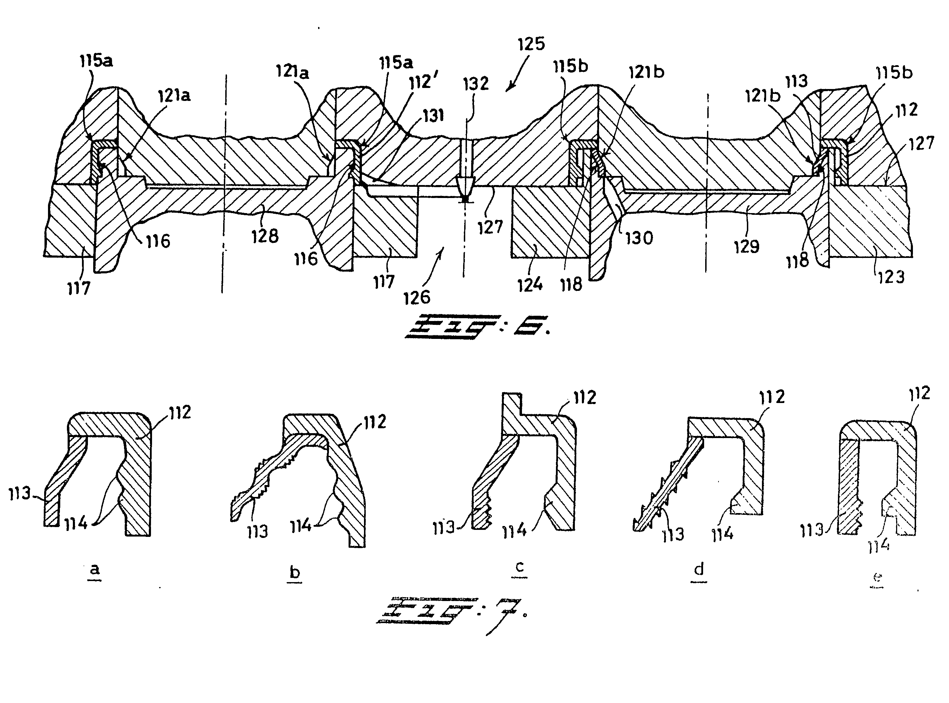

Figure 4 shows another sealing body 111 produced by the method according to the invention. Like the sealing body 11 of Figure 1, this sealing body also comprises a retaining ring 112 of thermoplastic material and a sealing ring 113, preferably consisting of thermoplastic rubber, but the shape is different.

Figure 5 shows the different phases during the moulding of the sealing body 111, while Figure 6 shows a part of the mould for moulding the sealing body 111.

Figures 4, 5 and 6 are similar to Figures 1, 2 and 3 respectively. The different parts in Figures 4, 5 and 6 have the same reference numbers as the corresponding parts in Figures 1, 2 and 3, with the prefix "1".

The method for manufacturing the sealing body 111 of Figure 4 is the same as for the sealing body 11 of Figure 1, as described before, except the last phase, i.e. the removal of the finished sealing body from the mould. This is because the sealing body 111 of Figure 4 is in itself releasing from the upper mould half 125.

In Figure 5e is shown that during the opening of the second mould cavity the sealing body 111 is carried by the second outer mould cavity surface 118, and the inner side 125 of the sealing ring 113 lies free.

Finally, the sealing body 111 is removed from the mould cavity surface 118 in the direction of the arrow 124 in Figure 5e by means of a stripper means 123 moveable in the axial direction of the sealing body 111, this being possible because the sealing ring 113 is made of flexible material.

The mould shown in Figure 6 for moulding the sealing body of Figure 4 differs from the mould of Figure 3 in that the mould comprises a stripper means 123 moveable in axial direction over a mould part 129 in the lower mould half 126. When after a sealing ring 113 and a retaining ring 112' have been moulded practically simultaneously, the mould halves 125 and 126 are moved apart and then the sealing body 111 is removed from the cavity surface 118 by means of the stripper means 124 practically simultaneously with the removal of the retaining ring 112' from the first inner mould cavity surface 116 and its replacement against the first outer mould cavity surface 115a.

Figure 7 shows a number of other sealing bodies comprising a retaining ring 112 and a sealing ring 113 bonded thereto, which may be produced by the method according to the invention. As is shown in Figure 7 both the retaining ring 112 and the sealing ring 113 may have different shapes. The sealing bodies shown in Figures 4 and 7 all have in common that they can be removed from the upper mould half 125 without deformation. In other words each sealing body is in itself releasing relative to the mould cavity surfaces 115, 115a, 115b and 121, 121a, 121b.

With the method and mould described it is possible to produce sealing bodies comprising a retaining ring and a sealing ring bonded to one another, in a very expedient manner and with relatively short cycle times.

It is obvious that in order to increase the rate of production it is possible to produce simultaneously two or more sealing bodies instead of one in the same mould provided with the appropriate number of first and second mould cavities.

It will also be clear that the method and the mould according to the invention are not restricted to the embodiments described in the example, and that, in addition to the sealing bodies described in the example many other forms of composite sealing bodies, in which a sealing ring is bonded to a retaining ring in accordance with the present invention, can also be produced.

**Claims**

1. Method for manufacturing a sealing body (11; 111), particularly for a pipe joint, comprising a retaining ring (12; 112) of thermoplastic material, which is to be fastened on the end portion of a pipe part, and a sealing ring (13; 113) disposed coaxially to said retaining ring and bonded thereto, one of these elements (12, 13; 112, 113) being moulded in a first mould cavity, after which the other element is moulded in a second mould cavity which is partly bounded by a part of the previously moulded element, characterized in that the retaining ring (12; 112) is first moulded by injection moulding in a first mould cavity bounded by a first outer mould cavity surface (15, 15a; 115, 115a) and a first inner mould cavity surface (16; 116), both surfaces being movable in the axial direction of the mould cavity, relative to one another, the first mould cavity is opened, while the moulded retaining ring (12; 112) remains on the first inner mould cavity surface (16; 116), the retaining ring (12; 112) is removed from the first inner mould cavity surface (16; 116) by means of a stripper means (17; 117) and is placed back against the oppositely situated first outer mould cavity surface (15, 15a; 115, 115a), whereupon the sealing ring (13; 113) is moulded in a second mould cavity (19; 119) situated next to the retaining ring (12; 112) and bounded by a part (20; 120) of the surface of the retaining ring (12; 112), a second inner mould cavity surface (21, 21b; 121, 121b) and a second outer mould cavity surface (18; 118) which is moveable in the axial direction of the mould cavity relative to the second inner mould cavity surface (21, 21b; 121, 121b), the sealing ring (13; 113) thus being bonded to the retaining ring (12; 112), the second mould cavity is opened, and finally the sealing body (11; 111) is removed from the mould.

2. Method according to Claim 1, characterized in that the sealing ring (13; 113) is moulded by injection moulding from a thermoplastic material, particularly a thermoplastic rubber.

3. Method according to Claim 1 or 2, characterized in that the sealing ring (13; 113) is moulded practically simultaneously with a following retaining ring (12'; 112') in first and second mould cavities spaced apart in one and the same mould.

4. Method according to Claim 3, characterized in that the removal of the sealing body (11) from the mould is effected practically simultaneously with the removal of the second retaining ring (12'; 112') from the first inner mould cavity surface (16; 116) and its replacement against the oppositely situated first outer mould cavity surface (15a; 115a).

5. Method according to one of Claims 1 to 4, characterized in that during the opening of the second mould cavity the sealing body (11) remains on the first outer mould cavity surface (15, 15b) and the second inner mould cavity surface (21, 21b) and the sealing body is removed from these mould cavity surfaces by means of ejector means (23, 23b).

6. Method according to one of Claims 1 to 4, characterized in that during the opening of the second mould cavity the sealing body (111) is carried by the second outer mould cavity surface (118) and the sealing body (111) is removed from this mould cavity surface by means of a stripper means (123).

7. Mould for manufacturing a sealing body, particularly for a pipe joint, comprising a retaining ring (12; 112) which is to be fastened on the end portion of a pipe part, and a sealing ring (13; 113) disposed coaxially to said retaining ring and bonded thereto, said mould comprising a first mould cavity, in which one (12; 112) of these elements is moulded and a second mould cavity (19; 119) in which is subsequently moulded the other element (13; 113), said second mould cavity being partly bounded by a part of the previously moulded element (12; 112), characterised in that the mould comprises two mould halves (25 and 26; 125 and 126) movable relative to one another, one mould half (25; 125) being provided with at least two first outer mould cavity surfaces (15a, 15b; 115a, 115) and two second inner mould cavity surfaces (21a, 21b; 121a, 121b) and the other mould half (26; 126) being provided with at least one first inner mould cavity surface (16; 116) and one second outer mould cavity surface (18; 118) which surfaces can be positioned coaxially opposite the first outer mould cavity surfaces (15a, 15b; 115a, 115b) and the second inner mould cavity surfaces (21a, 21b; 121a, 121b) to enclose at least the first mould cavity and the second mould cavity (19; 119).

8. Mould according to Claim 7, characterized in that each first outer mould cavity surface (15a and 15b; 115a and 115b respectively) adjoins a second inner mould cavity surface (21a and 21b; 121a and 121b respectively).

9. Mould according to Claim 7 or 8, characterized in that the two mould halves (25, 26; 125, 126) are rotatable, relative to one another, about an axis (32; 132) located centrally between the two first outer mould cavity surfaces (15a, 15b; 115a, 115b) and the two second inner mould cavity surfaces (21a, 21b; 121a, 121b) respectively, and centrally between the first inner mould cavity surface (16; 116) and the second outer mould cavity surface (18; 118), and extending parallel to the axes of symmetry of the mould cavity surfaces, whereby the first inner mould cavity surface (16; 116) and the second outer mould cavity surface (18; 118) respectively can selectively be positioned opposite one of the first outer mould cavity surfaces (15a, 15b; 115a, 115b) and respectively opposite one of the second inner mould cavity surfaces (21a, 21b; 121a, 121b).

**Patentansprüche**

1. Verfahren zum Herstellen eines Dichtungskörpers (11; 111), insbesondere für eine Rohrverbindung, mit einem Haltering (12; 112) aus thermoplastischem Material, der am Endbereich eines Rohrteils zu befestigen ist, und einem koaxial zum Haltering angeordneten und mit diesem verbundenen Dichtungsring (13; 113), wobei eines dieser Elemente (12, 13; 112, 113) in einem ersten Formraum geformt wird, woraufhin das andere Element in einem zweiten Formraum geformt wird, der teilweise von einem Teil des zuvor geformten Elements begrenzt ist, dadurch gekennzeichnet, daß der Haltering (12; 112) zuerst durch Spritzgießen in einem ersten Formraum geformt wird, der von einer ersten äußeren Formraumfläche (15, 15a; 115, 115a) und einer ersten inneren Formraumfläche (16; 116) begrenzt ist, wobei beide Flächen in Axialrichtung des Formraums relativ zueinander bewegbar sind, der erste Formraum geöffnet wird, während der geformte Haltering (12; 112) auf der ersten inneren Formraumfläche (16; 116) verbleibt, der Haltering (12; 112) von der ersten inneren Formraumfläche (16; 116) mittels eines Abstreifers (17; 117) entfernt und gegen die gegenüberliegend angeordnete erste äußere Formraumfläche (15, 15a; 115, 115a) zurückversetzt wird, woraufhin der Dichtungsring (13; 113) in einem zweiten, dem Haltering (12; 112) nächstgelegenen Formraum (19; 119) geformt wird, der von einem Teil (20; 120) der Oberfläche des Halterings (12; 112), einer zweiten inneren Formraumfläche (21, 21b; 121, 121b) und einer zweiten äußeren Formraumfläche (18; 118) begrenzt wird, die in Axialrichtung des Formraums relativ zur zweiten inneren Formraumfläche (21, 21b; 121, 121b) relativbewegbar ist, wobei der Dichtungsring (13; 113) auf diese Weise mit dem Haltering (12; 112) verbunden wird, der zweite Formraum geöffnet wird und schließlich der Dichtungskörper (11; 111) aus der Form entfernt wird.

2. Verfahren nach Anspruch 1, dadurch gekennzeichnet, daß der Dichtungsring (13; 113) durch Spritzgießen aus einem thermoplastischen Material, insbesondere einem thermoplastischem Gummi, geformt wird.

3. Verfahren nach Anspruch 1 oder 2, dadurch gekennzeichnet, daß der Dichtungsring (13; 113) praktisch gleichzeitig mit einem folgenden Haltering (12'; 112') in ersten und zweiten mit Abstand voneinander in ein und derselben Form angeordneten Formräumen geformt wird.

4. Verfahren nach Anspruch 3, dadurch gekennzeichnet, daß das Entfernen des Dichtungskörpers (11) aus der Form praktisch gleichzeitig mit dem Entfernen des zweiten Halterings (12'; 112') von der ersten inneren Formraumfläche (16; 116) und dessen erneutem Gegensetzen gegen die gegenüberliegend angeordnete erste äußere Formraumfläche (15a; 115a) durchgeführt wird.

5. Verfahren nach einem der Ansprüche 1 bis 4, dadurch gekennzeichnet, daß während des Öffnens des zweiten Formraums der Dichtungskörper (11) an der ersten äußeren Formraumfläche (15, 15b) und der zweiten inneren Formraumfläche (21, 21b) verbleibt, und der Dichtungskörper von diesen Formraumflächen mittels einer Auswerfeinrichtung (23, 23b) entfernt wird.

6. Verfahren nach einem der Ansprüche 1 bis 4, dadurch gekennzeichnet, daß während des Öffnens des zweiten Formraums der Dichtungskörper (111) von der zweiten äußeren Formraumfläche (118) getragen und der Dichtungskörper (111) von dieser Formraumfläche mittels einer Abstreifereinrichtung (123) entfernt wird.

7. Form zum Herstellen eines Dichtungskörpers, insbesondere für eine Rohrverbindung, bestehend aus einem Haltering (12; 112), der am Endbereich eines Rohrteils zu befestigen ist, und einem koaxial zum Haltering angeordneten und mit diesem verbundenen Dichtungsring (13; 113), wobei die Form einen ersten Formraum, in dem eines (12; 112) dieser Elemente geformt wird, und einen zweiten Formraum (19; 119), in dem anschließend das andere Elment (13; 113) geformt wird, umfaßt und der zweite Formraum teilweise von einem Teil des zuvor geformten Elements (12; 112) begrenzt ist, dadurch gekennzeichnet, daß die Form zwei relativ zueinander bewegbare Formhälften (25 und 26; 125 und 126) umfaßt, eine Formhälfte (25; 125) mit zumindest zwei ersten äußeren Formraumflächen (15a, 15b; 115a, 115b) und zwei zweiten inneren Formraumflächen (21a, 21b; 121a, 121b) versehen ist und die andere Formhälfte (26;126) mit zumindest einer ersten inneren Formraumfläche (16; 116) und einer zweiten äußeren Formraumfläche (18; 118) versehen ist, welche Flächen den ersten äußeren Formraumflächen (15a, 15b; 115a, 115b) und den zweiten inneren Formraumflächen (21a, 21b; 121a, 121b) koaxial gegenüber angeordnet werden können, um zumindest den ersten Formraum und den zweiten Formraum (19; 119) einzuschließen.

8. Form nach Anspruch 7, dadurch gekennzeichnet, daß jede erste äußere Formraumfläche (15a und 15b; 115a und 115b) an eine zweite innere Formraumfläche (21a und 21b; 121a und 121b) anschließt.

9. Form nach Anspruch 7 oder 8, dadurch gekennzeichnet, daß die beiden Formhälften (25, 26; 125; 126) relativ zueinander um eine Achse (32; 132) drehbar sind, die mittig zwischen den beiden ersten äußeren Formraumflächen (15a, 15b; 115a, 115b) bzw. den beiden zweiten inneren Formraumflächen (21a, 21b; 121a, 121b) sowie mittig zwischen der ersten inneren Formraumfläche (16; 116) und der zweiten äußeren Formraumfläche (18; 118) angeordnet ist und parallel zu den Symmetrieachsen der Formraumflächen verläuft, wobei die erste innere Formraumfläche (16; 116) bzw. die zweite äußere Formraumfläche (18; 118) wahlweise gegenüber einer der ersten äußeren Formraumflächen (15a, 15b; 115a, 115b) bzw. gegenüber einer der zweiten inneren Formraumflächen (21a, 21b; 121a, 121b) angeordnet werden können.

**Revendications**

1. Procédé pour fabriquer un corps d'étanchéité (11; 111), notamment pour une jonction de tuyau, comprenant une bague de retenue (12; 112) en une matière thermoplastique, qui est destinée à être fixée sur la portion d'extrémité d'un élément de tuyau, et une bague d'étanchéité (13; 113) disposée coaxialement par rapport à ladite bague de retenue à laquelle elle est liée, un de ces éléments (12, 13; 112, 113) étant moulé dans une première cavité de moule, après quoi on procède au moulage de l'autre élément dans une seconde cavité de moule partiellement délimitée par une partie de l'élément moulé précédemment, caractérisé en ce qu'on réalise d'abord la bague de retenue (12; 112) par moulage par injection dans une première cavité de moule délimitée par une première surface de cavité de moule extérieure (15, 15a; 115, 115a) et par une première surface de cavité de moule intérieure (16; 116), ces deux surfaces étant mobiles dans le sens axial de la cavité de moule, l'une par rapport à l'autre, on ouvre la première cavité de moule alors que la bague de retenue moulée (12; 112) reste sur la première surface de cavité de moule intérieure (16; 116), on sépare la bague de retenue (12; 112) de la première surface de cavité de moule intérieure (16; 116) à l'aide d'un moyen de démoulage (17; 117) et on la remet en place contre la première surface de cavité de moule extérieure (15, 15a; 115, 115a) située en face, après quoi on réalise la bague d'étanchéité (13; 113) par moulage dans une seconde cavité de moule (19; 119) située à proximité de la bague de retenue (12; 112) et délimitée par une partie (20; 120) de la surface de la bague de retenue (12; 112), par une seconde surface de cavité de moule intérieure (21, 21b; 121, 121b), et par une seconde surface de cavité de moule extérieure (18; 118) qui est mobile dans le sens axial de la cavité de moule par rapport à la seconde surface de cavité de moule intérieure (21, 21b; 121, 121b), la bague d'étanchéité (13; 113) étant de ce fait liée à la bague de retenue (12; 112), on ouvre la seconde cavité de moule et enfin on démoule le corps d'étanchéité (11; 111).

2. Procédé selon la revendication 1, caractérisé en ce que la bague d'étanchéité (13; 113) est réalisée par moulage par injection d'une matière thermoplastique, notamment d'un caoutchouc thermoplastique.

3. Procédé selon la revendication 1 ou 2, caractérisé en ce que la bague d'étanchéité (13; 113) est moulée pratiquement en même temps qu'une bague de retenue suivante (12'; 112') dans des première et seconde cavités de moule espacées, dans un seul et même moule.

4. Procédé selon la revendication 3, caractérisé en ce que le démoulage du corps d'étanchéité (11) s'effectue pratiquement en même temps que la séparation de la seconde bague de retenue (12'; 112') de la première surface de cavité de moule intérieure (16; 116) et sa remise en place contre la première surface de cavité de moule extérieure située en face (15a; 115a).

5. Procédé selon l'une des revendications 1 à 4, caractérisé en ce que, lors de l'ouverture de la seconde cavité de moule, le corps d'étanchéité (11) reste sur la première surface de cavité de moule extérieure (15, 15b) et sur la seconde surface de cavité de moule intérieure (21, 21b) et on sépare le corps d'étanchéité de ces surfaces de cavité de moule à l'aide de moyens d'éjection (23, 23b).

6. Procédé selon l'une des revendications 1 à 4, caractérisé en ce que, lors de l'ouverture de la seconde cavité de moule, le corps d'étanchéité (111) est porté par la seconde surface de cavité de moule extérieure (118) et on sépare le corps d'étanchéité (111) de cette surface de cavité de moule à l'aide d'un moyen de démoulage (123).

7. Moule pour fabriquer un corps d'étanchéité, notamment pour une jonction de tuyau, comprenant une bague de retenue (12; 112) destinée à être fixée sur la portion d'extrémité d'un élément de tuyau, et une bague d'étanchéité (13; 113) disposée coaxialement par rapport à la bague de retenue à laquelle elle est liée, ledit moule comprenant une première cavité de moule dans laquelle s'effectue le moulage d'un (12; 112) de ces éléments et une seconde cavité de moule (19; 119) dans laquelle s'effectue le moulage de l'autre élément (13; 113) consécutivement, ladite seconde cavité de moule étant délimitée partiellement par une partie de l'élément moulé précédemment (12; 112), caractérisé en ce que le moule comprend deux moitiés de moule (25 et 26; 125 et 126) mobiles l'une par rapport à l'autre, une moitié de moule (25; 125) étant pourvue d'au moins deux premières surfaces de cavité de moule extérieures (15a, 15b; 115a, 115b) et deux secondes surfaces de cavité de moule intérieures (21a, 21b; 121a, 121b), tandis que l'autre moitié de moule (26; 126) est pourvue d'au moins une première surface de cavité de moule intérieure (16; 116) et une seconde surface de cavité de moule extérieure (18; 118), surfaces pouvant être positionnées coaxialement en face des premières surfaces de cavité de moule extérieures (15a, 15b; 115a, 115b) et des secondes surfaces de cavité de moule intérieures (21a, 21b; 121a, 121b) pour délimiter au moins la première cavité de moule et la seconde cavité de moule (19; 119).

8. Moule selon la revendication 7, caractérisé en ce que chaque première surface de cavité de moule extérieure (15a, 15b; 115a, 115b) respectivement est attenante à une seconde surface de cavité de moule intérieure (21a et 21b; 121a et 121b respectivement).

9. Moule selon la revendication 7 ou 8, caractérisé en ce que les deux moitiés de moule (25, 26; 125, 126) peuvent tourner, l'une par rapport à l'autre, autour d'un axe (32; 132) situé centralement entre les deux premières surfaces de cavité de moule extérieures (15a, 15b; 115a, 115b) et les deux secondes surfaces de cavité de moule intérieures (21a, 21b; 121a, 121b) respectivement, et centralement entre la première surface de cavité de moule intérieure (16; 116) et la seconde surface de cavité de moule extérieure (18; 118), et s'étendant parallèlement aux axes de symétrie des surfaces de cavité de moule, de sorte que la première surface de cavité de moule intérieure (16; 116) et la seconde surface de cavité de moule extérieure (18; 118) respectivement peuvent être positionnées de manière sélective en face de l'une des premières surfaces de cavité de moule extérieures (15a, 15b; 115a, 115b) et respectivement en face de l'une des secondes surfaces de cavité de moule intérieures (21a, 21b; 121a, 121b).

Fig. 1.

Fig. 2.

a  b  c  d  e

1

Fig. 2

Fig. 4.

Fig. 5.

0 188 301

*FIG. 6.*

a        b        c        d        e

*FIG. 7.*